# EUROPÄISCHE PATENTSCHRIFT

(11) **EP 3 792 306 B1**
(45) Veröffentlichungstag und Bekanntmachung des Hinweises auf die Patenterteilung: **12.04.2023**
(21) Anmeldenummer: 20193956.8
(22) Anmeldetag: 01.09.2020
(51) Int. Cl.: C08L 7/00, B60C 1/00, C08K 3/36, C08K 5/098, C08K 5/101, C08K 5/548

(54) **SCHWEFELVERNETZBARE KAUTSCHUKMISCHUNG, VULKANISAT UND FAHRZEUGREIFEN**
SULPHUR LINKABLE NATURAL RUBBER MIXTURE AND VEHICLE TYRE
MÉLANGE DE CAOUTCHOUC RÉTICULABLE AU SOUFRE, CAOUTCHOUC VULCANISÉ ET PNEUMATIQUES DE VÉHICULE

(30) Priorität: 13.09.2019 DE 102019213978
(43) Veröffentlichungstag der Anmeldung: 17.03.2021
(73) Patentinhaber: Continental Reifen Deutschland GmbH, 30165 Hannover (DE)
(72) Erfinder: Kügler, Merle, 30419 Hannover (DE); Geidel, Christian, 30419 Hannover (DE)
(74) Vertreter: Continental Corporation

(56) Entgegenhaltungen:
- EP-A1- 1 179 560
- EP-A2- 0 881 255
- CN-A- 102 675 697
- FR-A1- 3 059 331
- GB-A- 1 439 247
- KR-A- 20020 078 244
- US-A- 4 229 333
- US-A- 5 733 963
- US-A- 6 147 166
- US-A1- 2004 129 360
- US-A1- 2019 241 721

## Beschreibung

Die Erfindung betrifft eine schwefelvernetzbare Kautschukmischung, ein Vulkanisat und einen Fahrzeugreifen.

Die Kautschukzusammensetzung des Laufstreifens bestimmt in hohem Maße die Fahreigenschaften eines Fahrzeugreifens, insbesondere eines Fahrzeugluftreifens. Ebenso sind die Kautschukmischungen, die in Riemen, Schläuchen und Gurten Verwendung vor allem in den mechanisch stark belasteten Stellen finden, für Stabilität und Langlebigkeit dieser Gummiartikel im Wesentlichen verantwortlich. Daher werden an diese Kautschukmischungen für Fahrzeugluftreifen, Gurte, Riemen und Schläuche sehr hohe Anforderungen gestellt.

Es bestehen Zielkonflikte zwischen den meisten der bekannten Reifeneigenschaften wie Nassgriffverhalten, Trockenbremsen, Handling-Verhalten, Rollwiderstand, Wintereigenschaften, Abriebverhalten und Reißeigenschaften.

Insbesondere bei Fahrzeugluftreifen wurden vielfältige Versuche unternommen, die Eigenschaften des Reifens durch die Variation der Polymerkomponenten, der Füllstoffe und der sonstigen Zuschlagstoffe vor allem in der Laufstreifenmischung positiv zu beeinflussen.

Dabei muss man berücksichtigen, dass eine Verbesserung in der einen Reifeneigenschaft oft eine Verschlechterung einer anderen Eigenschaft mit sich bringt.

Es ist außerdem bekannt, dass Kautschukmischungen, insbesondere für den Laufstreifen von Fahrzeugluftreifen, Kieselsäure als Füllstoff enthalten können. Zudem ist bekannt, dass sich Vorteile hinsichtlich des Rollwiderstandsverhaltens und der Prozessierbarkeit der Kautschukmischung ergeben, wenn die Kieselsäure mittels Silan-Kupplungsagenzien an das oder die Polymer(e) angebunden ist.

Im Stand der Technik bekannte Silan-Kupplungsagenzien gehen beispielsweise aus der DE 2536674 C3 und der DE 2255577 C3 hervor.

Prinzipiell kann unterschieden werden zwischen Silanen, die nur an Kieselsäure oder vergleichbare Füllstoffe anbinden und hierzu insbesondere wenigstens eine Silyl-Gruppe aufweisen, und Silanen, die zusätzlich zu einer Silyl-Gruppe eine Sₓ-Gruppierung aufweisen, welche mit x größer oder gleich 2 (polysulfidische Gruppe) bei der Schwefelvulkanisation auch an Polymere anbinden kann. Silane mit einer Sₓ-Gruppierung, bei der x größer oder gleich 3 ist, wirken zudem als Schwefelspender, da Schwefelatome freigesetzt werden können.

Die US 4229333, GB 1439247, FR 3059331 A1, CN 102675697 A, KR 20020078244 A, US 5733963 A, EP 1179560 A1, US 2004129360 A1, US 6147166 A, US 2019241721 A1 und die EP 0881255 A2 offenbaren jeweils eine Kautschukmischung enthaltend ein Polysulfidsilan, Kieselsäure und Naturkautschuk sowie Zinkoxid und eine Fettsäure, insbesondere Stearinsäure.

Dennoch können sich bei Verwendung von höheren Mengen an Kieselsäure in der Kautschukmischung Schwierigkeiten hinsichtlich der gleichmäßigen Verteilung der Kieselsäure und damit ihrer Eigenschaften ergeben.

So offenbart die EP 2512824 B1 die Verwendung eines Amids als Prozesshilfsmittel, um die Eigenschaften einer Kautschukmischung mit einer vergleichsweise hohen Menge an Kieselsäure von 45 bis 110 phr zu verbessern.

Besondere Herausforderungen beim Einsatz von Kieselsäure treten zudem in Kautschukmischungen mit Naturkautschuk auf, da die Polymerketten des Naturkautschuks bei den üblicherweise hohen Temperaturen für die Silanisierungsreaktion abgebaut werden, was sich nachteilig auf das Rollwiderstands-Verhalten und die sonstigen Eigenschaften auswirken kann.

Der vorliegenden Erfindung liegt die Aufgabe zugrunde, ausgehend vom Stand der Technik eine schwefelvernetzbare Kautschukmischung bereitzustellen, die eine Verbesserung im Rollwiderstands-Verhalten sowie im Zielkonflikt aus Rollwiderstand und Nassgriff aufweist, wobei die übrigen Eigenschaften, wie insbesondere Härte und Steifigkeit, zumindest auf einem vergleichbaren Niveau verbleiben oder sogar ebenfalls verbessert werden.

Gelöst wird die Aufgabe erfindungsgemäß durch die schwefelvernetzbare Kautschukmischung gemäße Anspruch 1.

Überraschenderweise hat sich herausgestellt, dass durch die Kombination der oben genannten Bestandteile eine Verbesserung im Zielkonflikt aus Rollwiderstand und Nassgriff und dabei insbesondere ein verbessertes Rollwiderstands-Verhalten erzielt wird, wobei übrige Eigenschaften, wie insbesondere die Steifigkeit und die Härte, auf einem guten Niveau verbleiben oder sogar ebenfalls verbessert werden, wodurch sich insbesondere bei der Anwendung in Fahrzeugreifen neben der Verbesserung im Nassgriff und Rollwiderstand ein vergleichbares oder sogar verbessertes Handling-Verhalten ergibt.

Ein weiterer Gegenstand der vorliegenden Erfindung ist ein Vulkanisat wenigstens einer erfindungsgemäßen Kautschukmischung.

Ein weiterer Gegenstand der vorliegenden Erfindung ist ein Fahrzeugreifen, der wenigstens ein erfindungsgemäßes Vulkanisat der erfindungsgemäßen Kautschukmischung in wenigstens einem Bauteil aufweist. Bevorzugt weist der Fahrzeugreifen das wenigstens eine Vulkanisat zumindest im Laufstreifen auf.

Bevorzugt weist der Laufstreifen ein Profil mit Blöcken und Rillen und einer Profiltiefe von ≥ (größer oder gleich) 15 mm (Millimeter) und Rillenabständen zwischen den Blöcken von ≤ (kleiner oder gleich) 15 mm auf.

Das erfindungsgemäße Vulkanisat und der erfindungsgemäßen Fahrzeugreifen zeichnen sich durch eine Verbesserung im Zielkonflikt aus Rollwiderstand und Nassgriff aus. Gleichzeitig weisen sie ein sehr gutes Handling-Verhalten auf.

Bei zweigeteilten Laufstreifen (oberer Teil: Cap und unterer Teil: Base) kann die erfindungsgemäße Kautschukmischung sowohl für die Cap als auch für die Base verwendet werden. Bevorzugt weist wenigstens die Cap oder wenigstens die Base oder wenigstens die Cap und die Base wenigstens ein erfindungsgemäßes Vulkanisat der erfindungsgemäßen Kautschukmischung auf.

Die erfindungsgemäße Kautschukmischung ist ferner auch für Laufstreifen geeignet, die aus verschiedenen nebeneinander und/oder untereinander angeordneten Laufstreifenmischungen bestehen (Multikomponentenlaufstreifen).

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.

Bevorzugt handelt es sich um einen LKW-Reifen, wobei das vorstehend beschriebene Profil mit einer vergleichsweise hohen Profiltiefe und einem vergleichsweise geringen Rillenabstand bevorzugt ist.

Insbesondere bei derartigen Reifen zeigen sich die mit der Erfindung erzielten Vorteile besonders stark.

Die erfindungsgemäße Kautschukmischung ist ferner auch für andere Bauteile von Fahrzeugreifen geeignet, wie z. B. insbesondere dem Hornprofil, sowie für innere Reifenbauteile. Die erfindungsgemäße Kautschukmischung ist ferner auch für andere technische Gummiartikel, wie Bälge, Förderbänder, Luftfedern, Gurte, Riemen oder Schläuche, sowie Schuhsohlen geeignet.

Im Folgenden werden die Bestandteile der erfindungsgemäßen schwefelvernetzbaren Kautschukmischung näher beschrieben. Sämtliche Ausführungen gelten auch für das erfindungsgemäße Vulkanisat und den erfindungsgemäßen Fahrzeugreifen, der wenigstens ein erfindungsgemäßes Vulkanisat der erfindungsgemäßen Kautschukmischung in wenigstens einem Bauteil aufweist.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen Kautschuke bezogen mit einem Molekulargewicht M_{w} gemäß GPC von größer als 20000 g/mol.

Die in dieser Schrift verwendete Angabe phf (parts per hundred parts of filler by weight) ist dabei die in der Kautschukindustrie gebräuchliche Mengenangabe für Kupplungsagenzien für Füllstoffe. Sie wird im Rahmen der vorliegenden Erfindung auch für die Mengenangabe des wenigstens einen Fettsäure-Derivates verwendet.

Im Rahmen der vorliegenden Anmeldung bezieht sich phf auf die vorhandene Kieselsäure, das heißt, dass andere eventuell vorhandene Füllstoffe wie Ruß nicht in die Berechnung mit eingehen. Für den Fall, dass die Kautschukmischung zwei oder mehrere verschiedene Kieselsäuren enthält, wird die Gesamtmenge aller Kieselsäuren bei der phf-Menge herangezogen.

Die erfindungsgemäße Kautschukmischung enthält 75 bis 100 phr, bevorzugt 80 bis 100 phr, wenigstens eines natürlichen Polyisoprens (Naturkautschuk NR).

Hierbei kann es sich um alle dem Fachmann bekannten Typen handeln.

Im Rahmen der vorliegenden Erfindung ist unter dem Begriff "Naturkautschuk" natürlich vorkommender Kautschuk zu verstehen, der von Hevea Gummibäumen und "Nicht-Hevea" Quellen gewonnen werden kann. Nicht-Hevea Quellen sind beispielsweise Guayule Sträucher und Löwenzahn wie beispielsweise TKS (Taraxacum kok-saghyz; Russischer Löwenzahn).

Gemäß vorteilhafter Ausführungsformen enthält die erfindungsgemäße Kautschukmischung 95 bis 100 phr, bevorzugt 98 bis 100 phr, insbesondere 100 phr, wenigstens eines natürlichen Polyisoprens (Naturkautschuk NR).

Für den Fall, dass die Kautschukmischung weniger als 100 phr NR enthält, enthält sie bevorzugt wenigstens einen weiteren Dienkautschuk.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen. Bei dem weiteren Dienkautschuk handelt es sich um Polybutadien (Butadien-Kautschuk BR) und/oder Styrol-Butadien-Copolymer (Styrol-Butadien-Kautschuk SBR) und/oder synthetisches Polyisopren (IR) und/oder epoxidiertes Polyisopren (ENR) und/oder Styrol-Isopren-Kautschuk und/oder Halobutyl-Kautschuk und/oder Polynorbornen und/oder Isopren-Isobutylen-Copolymer und/oder Ethylen-Propylen-Dien-Kautschuk und/oder Nitril-Kautschuk und/oder Chloropren-Kautschuk und/oder Acrylat-Kautschuk und/oder Fluor-Kautschuk und/oder Silikon-Kautschuk und/oder Polysulfid-Kautschuk und/oder Epichlorhydrin-Kautschuk und/oder Styrol-Isopren-Butadien-Terpolymer und/oder hydrierten Acryl-nitrilbutadien-Kautschuk und/oder hydrierten Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, und/oder Schuhsohlen zum Einsatz. Dabei finden die dem Fachmann für diese Kautschuke bekannten - im Hinblick auf Füllstoffe, Weichmacher, Vulkanisationssysteme und Zuschlagstoffe besonderen - Mischungszusammensetzungen bevorzugte Anwendung.

Bevorzugt handelt es sich bei dem oder den weiteren Dienkautschuk(en) jedoch um Polybutadien (Butadien-Kautschuk) und/oder Styrol-Butadien-Copolymer (Styrol-Butadien-Kautschuk).

Gemäß vorteilhafter Ausführungsformen der Erfindung ist es bevorzugt, dass die Kautschukmischung 5 bis 25 phr wenigstens eines Styrol-Butadien-Kautschuks und/oder 5 bis 25 phr wenigstens eines Butadien-Kautschuks enthält, wobei die Gesamtmenge aller enthaltenen Kautschuke 100 phr beträgt.

Falls in der erfindungsgemäßen Kautschukmischung Butadien-Kautschuk (= BR, Polybutadien) enthalten ist, kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadien-Kautschuk) mit einem cis-Anteil von 20 bis 50 Gew.-%. Mit einem high-cis BR werden besonders gute Eigenschaften sowie eine niedrige Hysterese der Kautschukmischung erzielt.

Das oder die eingesetzte(n) Polybutadiene kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Gemäß vorteilhafter Ausführungsformen der Erfindung enthält die Kautschukmischung wenigstens ein Polybutadien mit einem cis-Anteil von 33 bis 98 Gew.-%, einem Vinyl-Anteil von 5 bis 30 Gew.-% und einer Glasübergangstemperatur (T_{g}) von - 70 °C bis - 110 °C (minus 70 Grad Celsius bis minus 110 Grad Celsius).

Für den Fall, dass wenigstens ein Styrol-Butadien-Kautschuk (Styrol-Butadien-Copolymer) in der Kautschukmischung enthalten ist, kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet.

Das eingesetzte Styrol-Butadien-Copolymer kann mit den oben beim Polybutadien genannten Modifizierungen und Funktionalisierungen endgruppenmodifiziert und/oder entlang der Polymerketten funktionalisiert sein.

Gemäß einer besonders vorteilhaften Ausführungsform der Erfindung enthält die Kautschukmischung wenigstens ein Polybutadien (Butadienkautschuk) und zwar bevorzugt in Mengen von 5 bis 25 phr, und gemäß einer besonders vorteilhaften Ausführungsform der Erfindung 10 bis 20 phr. Hiermit werden besonders gute dynamische Steifigkeiten bei geringem Hystereseverlust und vergleichsweise guten Reißeigenschaften der erfindungsgemäßen Kautschukmischung erzielt.

Gemäß einer besonders vorteilhaften Ausführungsform der Erfindung enthält die Kautschukmischung wenigstens ein Styrol-Butadien-Kautschuk (SBR) und zwar bevorzugt in Mengen von 5 bis 25 phr, und gemäß einer besonders vorteilhaften Ausführungsform der Erfindung 10 bis 20 phr. Hiermit werden ein geringer Hystereseverlust sowie gute Reißeigenschaften der erfindungsgemäßen Kautschukmischung erzielt.

Bevorzugt ist der SBR hierbei ein SSBR mit einem Styrolgehalt von 10 bis 30 Gew.-%, und bevorzugt dabei einem Vinyl-Anteil von 20 bis 60 Gew.-% und einer Glasübergangstemperatur (T_{g}) von - 20 °C bis - 60 °C (minus 20 Grad Celsius bis minus 60 Grad Celsius).

Der Styrolgehalt kann dabei über NMR ("nuclear magnetic resonance") bestimmt werden.

Die Bestimmung der Glasübergangstemperatur (T_{g}) der Polymere (insbesondere der funktionalisierten Styrol-Butadien-Kautschuke) erfolgt anhand von Dynamischer Differenz-Kalorimetrie (engl. Dynamic Scanning Calorimetry, DSC gemäß DIN 53765: 1994-03 bzw. ISO 11357-2: 1999-03.

Falls in der Kautschukmischung zusätzlich zu dem wenigstens einen natürlichen Polyisopren wenigstens ein synthetisches Polyisopren enthalten ist, kann es sich sowohl um cis-1,4-Polyisopren als auch um 3,4-Polyisopren handeln. Polyisopren kann durch stereospezifische Polymerisation in Lösung mit Ziegler-Natta-Katalysatoren oder unter Verwendung von fein verteilten Lithiumalkylen erhalten werden. Bevorzugt ist allerdings die Verwendung von cis-1,4-Polyisoprenen mit einem cis 1,4 Anteil > 90 Gew.-%. Bei Naturkautschuk (NR) handelt es sich um ein solches cis-1,4 Polyisopren, wobei der cis-1,4-Anteil im Naturkautschuk ist größer 99 Gew.- %.

Erfindungsgemäß enthält die Kautschukmischung wenigstens eine Kieselsäure.

Bei der Kieselsäure kann es sich um die dem Fachmann bekannten Kieselsäuretypen, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 400 m²/g, bevorzugt von 35 bis 350 m²/g, besonders bevorzugt von 85 bis 320 m²/g und ganz besonders bevorzugt von 120 bis 235 m²/g, und eine CTAB-Oberfläche (gemäß ASTM D 3765) von 30 bis 400 m²/g, bevorzugt von 30 bis 330 m²/g, besonders bevorzugt von 80 bis 300 m²/g und ganz besonders bevorzugt von 115 bis 200 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil^{®} VN3 (Handelsname) der Firma Evonik als auch hoch dispergierbare Kieselsäuren, so genannte HD-Kieselsäuren (z. B. Zeosil^{®} 1165 MP der Firma Solvay), zum Einsatz kommen.

Gemäß ganz besonders vorteilhafter Ausführungsformen der Erfindung ist wenigstens eine Kieselsäure in der erfindungsgemäßen schwefelvernetzbaren Kautschukmischung enthalten, die eine BET-Oberfläche von 140 bis 200 m²/g aufweist. Hiermit wird die erfindungsgemäße Aufgabe besonders gut gelöst.

Gemäß ganz besonders vorteilhafter Ausführungsformen der Erfindung ist wenigstens eine Kieselsäure in der erfindungsgemäßen schwefelvernetzbaren Kautschukmischung enthalten, die eine CTAB-Oberfläche (gemäß ASTM D 3765) von 135 bis 185 m²/g aufweist. Hiermit wird die erfindungsgemäße Aufgabe besonders gut gelöst.

Gemäß vorteilhafter Ausführungsformen enthält die Kautschukmischung 30 bis 300 phr, bevorzugt 30 bis 150 phr, besonders bevorzugt 30 bis 100 phr, ganz besonders bevorzugt 40 bis 100 phr, wenigstens einer Kieselsäure. Hiermit wird die erfindungsgemäße Aufgabe besonders gut gelöst.

Insbesondere mit erhöhten Kieselsäuremenge von mehr als 30 phr, insbesondere mehr als 40 phr, ergeben sich in Kombination mit dem erfindungsgemäß enthaltenen und unten näher erläuterten Silan, dem Naturkautschuk und dem Fettsäure-Derivat besonders vorteilhafte Eigenschaften hinsichtlich der Reifeneigenschaften der Kautschukmischung und ihrer Vulkanisate, insbesondere optimierte Rollwiderstands-, und Nassgriff-Prediktoren.

Für den Fall, dass wenigstens zwei verschiedene Kieselsäuren, die sich z. B. durch ihre BET-Oberfläche unterscheiden, in der erfindungsgemäßem Kautschukmischung enthalten sind, beziehen sich die genannten Mengenangaben immer auf die Gesamtmenge aller enthaltenen Kieselsäuren.

Die Begriffe "Kieselsäure" und "Silika" werden im Rahmen der vorliegenden Erfindung synonym verwendet.

Die erfindungsgemäße Kautschukmischung kann ferner gemäß vorteilhafter Ausführungsformen wenigstens einen Ruß in Mengen von 0,1 bis 15 phr, bevorzugt 5 bis 15 phr, enthalten.

Enthält die Kautschukmischung Ruß, sind alle dem Fachmann bekannten Ruß-Typen denkbar. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist.

Hiermit werden für die Anwendung im Fahrzeugreifen besonders gute Rollwiderstandsindikatoren (Rückprallelastizität bei 70 °C) und Reißeigenschaften erzielt.

Die erfindungsgemäße Kautschukmischung kann weitere Füllstoffe enthalten, beispielsweise in Mengen von 0,1 bis 50 phr. Zu den weiteren (nicht verstärkenden) Füllstoffen zählen im Rahmen der vorliegenden Erfindung Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern).

Weitere ggf. verstärkende Füllstoffe sind z.B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filier".

Zinkoxid gehört im Rahmen der vorliegenden Erfindung nicht zu den Füllstoffen.

Die erfindungsgemäße Kautschukmischung enthält wenigstens ein Polysulfidsilan, wobei das Polysulfidsilan wenigstens eine Polysulfidgruppe Sₙ aufweist, wobei n größer oder gleich 3 ist.

Bevorzugt weist das Polysulfidsilan die Formel I) auf:

I) (R¹)ₒSi-R²-Sₙ-R²-Si(R¹)ₒ,

wobei die Indices o unabhängig voneinander gleich 1 oder 2 oder 3 sein können und die Reste R¹ unabhängig voneinander gleich oder verschieden voneinander sein können und ausgewählt sind aus C₁-C₁₀-Alkoxygruppen, C₆-C₂₀-Phenoxygruppen, C₂-C₁₀-cyclischen Dialkoxygruppen, C₂-C₁₀- Dialkoxygruppen, C₄-C₁₀- Cycloalkoxygruppen, C₆-C₂₀-Arylgruppen, C₁-C₁₀-Alkylgruppen, C₂-C₂₀- Alkenylgruppen, C₂-C₂₀- Alkinylgruppen, C₇-C₂₀- Aralkylgruppen, Halogeniden oder
Alkylpolyethergruppe -O-(R⁶-O)ᵣ-R⁷, wobei die Reste R⁶ gleich oder verschieden sind und verzweigte oder unverzweigte, gesättigte oder ungesättigte, aliphatische, aromatische oder gemischt aliphatische/aromatische zweibindige C₁-C₃₀-Kohlenwasserstoffgruppe sind, r eine ganze Zahl von 1 bis 30 ist und die Reste R⁷ unsubstituierte oder substituierte, verzweigte oder unverzweigte einbindige Alkyl-, Alkenyl-, Aryl- oder Aralkylgruppen sind, oder
zwei R¹ entsprechen einer Dialkoxygruppe mit 2 bis 10 Kohlenstoffatomen wobei dann o < 3 ist,
oder es können zwei oder mehr Silane gemäß Formel I) über Reste R¹ oder durch Kondensation verbrückt sein; und
wobei die Bedingung gilt, dass in Formel I) in jeder (R¹)ₒSi-Gruppe wenigstens ein R¹ aus denjenigen oben genannten Möglichkeiten ausgewählt ist, bei der dieses R¹ i) über ein Sauerstoffatom an das Siliziumatom gebunden ist oder ii) ein Halogenid ist;
und die Reste R² unabhängig voneinander gleich oder verschieden sein können und verzweigte oder unverzweigte, gesättigte oder ungesättigte, aliphatische, aromatische oder gemischt aliphatische/aromatische C₁-C₃₀-Kohlenwasserstoffgruppen sind, die Heteroatome enthalten können;
und wobei n größer oder gleich 3 ist.

Für den Fall, dass zwei R¹ einer Dialkoxygruppe mit 2 bis 10 Kohlenstoffatomen entsprechen und dann o < 3 (o kleiner drei) ist, ist das Siliziumatom Teil eines Ringsystems.

Für den Fall, dass zwei Silane gemäß Formel I) mit einander verbrückt sind, teilen sie sich einen Rest R¹ oder sind durch Kombination zweier Si-R¹-Gruppen miteinander über ein Sauerstoffatom verknüpft. Auf diese Weise können auch mehr als zwei Silane aneinander verknüpft sein. Im Anschluss an die Synthese des Silans gemäß Formel I) ist es somit denkbar, dass zwei Silane gemäß Formel I) über ein Sauerstoffatom oder die Reste R¹ miteinander verbrückt werden. Auf diese Weise können auch mehr als zwei Silane aneinander verknüpft werden, wie beispielsweise über Dialkoxygruppen.

Die erfindungsgemäße Kautschukmischung kann somit auch Oligomere, die durch Hydrolyse und Kondensation oder durch Verbrücken mittels Dialkoxygruppen als R¹ der Silane der Formel I) entstehen, enthalten.

Die Silane gemäß den Formeln I) umfassen durch die Bedingung, dass in der Formel I) in jeder (R¹)ₒSi-Gruppe wenigstens ein R¹ aus denjenigen oben genannten Möglichkeiten ausgewählt ist, bei der dieses R¹ i) über ein Sauerstoffatom an das Siliziumatom gebunden ist oder ii) ein Halogenid ist, jeweils wenigstens einen Rest R¹, der als Abgangsgruppe dienen kann.

Insbesondere sind dies somit Alkoxy-Gruppen, Phenoxy-Gruppen oder sämtliche andere der genannten Gruppen, die mit einem Sauerstoffatom an das Siliziumatom gebunden sind, oder Halogenide.

Es ist bevorzugt, dass die Reste R¹ Alkylgruppen mit 1 bis 10 Kohlenstoffatomen (C₁-C₁₀-Alkylgruppe) oder Alkoxygruppen mit 1 bis 10 Kohlenstoffatomen (C₁-C₁₀-Alkoxygruppe) oder Halogenide umfassen, besonders bevorzugt sind Alkoxygruppen mit 1 bis 10 Kohlenstoffatomen (C₁-C₁₀-Alkoxygruppe).

Gemäß bevorzugter Ausführungsformen ist in jeder Silyl-Gruppe IV) wenigstens ein R¹ eine C₁-C₁₀-Alkoxygruppe, bevorzugt C₁-C₆-Alkoxygruppe.

Gemäß einer besonders vorteilhaften Ausführungsform der Erfindung sind die Reste R¹ innerhalb einer Silylgruppe (R¹)ₒSi- gleich und Alkoxygruppen mit 1 oder 2 Kohlenstoffatomen, also Methoxygruppen oder Ethoxygruppen, ganz besonders bevorzugt Ethoxygruppen, wobei o gleich 3 ist.

Aber auch bei Oligomeren oder im Fall, dass zwei R¹ eine Dialkoxy-Gruppe bilden, sind die übrigen Reste R¹ bevorzugt Alkylgruppen mit 1 bis 10 Kohlenstoffatomen oder Halogenide oder Alkoxygruppen mit 1 bis 10 Kohlenstoffatomen, bevorzugt 1 oder 2 Kohlenstoffatomen, also Methoxygruppen oder Ethoxygruppen, ganz besonders bevorzugt Ethoxygruppen.

Im Rahmen der vorliegenden Erfindung werden Ethoxygruppen in den Formeln der Silane mit EtO bzw. OEt abgekürzt dargestellt. Die beiden Schreibweisen verdeutlichen, dass Alkoxygruppen, wie Ethoxygruppen, über das Sauerstoffatom O an das Siliziumatom Si gebunden sind.

Prinzipiell können die Abkürzungen OEt und EtO aber im Rahmen der vorliegenden Erfindung synonym verwendet werden.

Besonders bevorzugt weist das Polysulfidsilan die Formel II) auf:

II) (R¹)₃Si-R²-Sₙ-R²-Si(R¹)₃,

wobei R¹ unabhängig voneinander gleich oder verschieden sein können und Alkoxygruppen sind und R² unverzweigte gesättigte C₁-C₃₀-Kohlenwasserstoffgruppen, bevorzugt C₂-C₁₀-Kohlenwasserstoffgruppen, sind und n größer oder gleich 3, bevorzugt 3 oder 4, ist.

Gemäß einer besonders vorteilhaften Ausführungsform der Erfindung weist das Polysulfidsilan die Formel III) auf:

III) (EtO)₃Si-(CH₂)₃-S₄-(CH₂)₃-Si(EtO)₃,

wobei EtO für Ethoxy steht.

Mit einem Polysulfidsilan gemäß Formel I), insbesondere gemäß Formel II) und besonders gemäß Formel III) wird die erfindungsgemäße Aufgabe in Kombination mit den weiteren erfindungsgemäß enthaltenen Bestandteilen besonders gut gelöst.

Die Verbindung gemäß Formel III) ist dem Fachmann auch als Bis(triethoxysilylpropyl)tetrasulfid (TESPT) bekannt.

Bevorzugt beträgt die Menge des wenigstens einen Polysulfidsilans 1 bis 30 phf, bevorzugt 1 bis 22 phf, besonders bevorzugt 2 bis 18,5 phf, ganz besonders bevorzugt 5 bis 15 phf. Für den Fall, dass die Kautschukmischung zwei oder mehrere verschiedene Polysulfidsilane - wie in Anspruch 1 definiert - enthält, beziehen sich die Mengenangaben auf die Gesamtmenge an enthaltenen Polysulfidsilanen.

Es ist im Rahmen der vorliegenden Erfindung auch denkbar, dass das Polysulfidsilan in Kombination mit einem oder mehreren anderen Silanen aus dem Stand der Technik eingesetzt wird.

Erfindungsgemäß enthält die Kautschukmischung wenigstens ein Fettsäure-Derivat, wobei die Menge an Fettsäure-Derivaten 5 bis 10 phf, bevorzugt 7 bis 10 phf, beträgt.

Fettsäure-Derivate als Zuschlagstoffe für Kautschukmischungen sind dem Fachmann bekannt. Dabei können die im Handel erhältlichen Substanzen auch Gemische von verschiedenen Fettsäure-Derivaten umfassen.

Erfindungsgemäß ist das wenigstens eine Fettsäure-Derivat ausgewählt aus Fettsäureestern, Fettsäuresalzen und Metallseifen.

Gemäß vorteilhafter Ausführungsformen der Erfindung umfasst das wenigstens eine Fettsäure-Derivat wenigstens eine Zinkseife. Beispielsweise kann es sich um STRUKTOL ^{®} EF 44 der Firma Schill + Seilacher "Struktol" GmbH handeln.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie die der Familie der PPD (Phenylendiamine) und dabei z. B. N-Phenyl-N'-(1,3-dimethylbutyl)-p-phenylendiamin (6PPD), N,N`-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) und/oder sonstige Aktivatoren, wie Zinkkomplexe wie z.B. Zinkethylhexanoat,
c) Wachse,
d) Haftsysteme, wie beispielsweise Klebharze
e) Mastikationshilfsmittel, wie z. B. 2,2'-Dibenzamidodiphenyldisulfid (DBD) und
f) ggf. Weichmacher.

Zu dem Begriff "Weichmacher" gehören im Rahmen der vorliegenden Erfindung alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Triglyceride, wie z. B. Rapsöl, oder Faktisse oder Kohlenwasserstoffharze oder Flüssig-Polymere, deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung zusätzliche Flüssig-Polymere als Weichmacher eingesetzt, so gehen diese nicht als Kautschuk in die Berechnung der Zusammensetzung der Polymermatrix ein.

Gemäß vorteilhafter Ausführungsformen der Erfindung enthält die Kautschukmischung neben dem wenigstens einen Fettsäure-Derivat jedoch keinen oder nur geringe Mengen an (weiterem) Weichmacher, d. h. 0 bis 0,3 phr, (weitere) Weichmacher. Gemäß dieser vorteilhaften Ausführungsformen der Erfindung ersetzt das wenigstens eine Fettsäure-Derivat im Stand der Technik verwendete Weichmacher, wie Öle oder Amide, wodurch sich verbesserte Eigenschaften ergeben.

Der Begriff "weitere Weichmacher" soll zum Ausdruck bringen, dass das wenigstens eine Fettsäure Derivat unter Umständen auch als Weichmacher angesehen werden könnte.

Der Mengenanteil der Gesamtmenge an weiteren Zusatzstoffen beträgt bevorzugt 3 bis 150 phr, bevorzugt 3 bis 100 phr und besonders bevorzugt 5 bis 80 phr.

Im Gesamtmengenanteil der weiteren Zusatzstoffe kann Zinkoxid (ZnO) enthalten sein. Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch ein Zinkoxid mit einer BET-Oberfläche von 10 bis 100 m²/g, wie z.B. so genannte "nano-Zinkoxide", verwendet werden.

Insbesondere bei der Verwendung der erfindungsgemäßen Kautschukmischung für die inneren Bauteile eines Reifens oder eines technischen Gummiartikels, welche direkten Kontakt zu vorhandenen Festigkeitsträgern haben, wird der Kautschukmischung in der Regel noch ein geeignetes Haftsystem, oft in Form von Klebharzen, zugefügt.

Das erfindungsgemäß enthaltene Polysulfidsilan kann auch als schwefelspendende Substanz angesehen werden.

Gemäß vorteilhafter Ausführungsformen der Erfindung enthält die Kautschukmischung - neben dem wenigstens einen Polysulfidsilan - wenigstens einen weiteren Schwefelspender und/oder elementaren Schwefel.

Die Vulkanisation wird daher bevorzugt in Anwesenheit von Schwefel und/oder Schwefelspendern und bevorzugt mit Hilfe von Vulkanisationsbeschleunigern durchgeführt, wobei einige Vulkanisationsbeschleuniger zugleich als Schwefelspender wirken können.

Schwefel und/oder weitere Schwefelspender sowie ein oder mehrere Beschleuniger werden im letzten Mischungsschritt der Kautschukmischung zugesetzt. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern und/oder Polyetheramin-Beschleunigern.

Bevorzugt ist die Verwendung wenigstens eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z. B. Thiuramdisulfide, wie z. B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z. B. Dipentamethylenthiuramtetrasulfid (DPTT), und/oder Dithiophosphate, wie z. B.

DipDis (Bis-(Diisopropyl)thiophosphoryldisulfid) und/oder Bis(O,O-2-ethylhexyl-thiophosphoryl)Polysulfid (z. B. Rhenocure SDT 50^{®}, Rheinchemie GmbH) und/oder Zinkdichloryldithiophosphat (z. B. Rhenocure ZDT/S^{®}, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide, welche nicht bereits Polysulfidsilane sind.

Die Menge an weiterem Schwefel in Form von elementarem Schwefel und/oder weiterem Schwefelspender richtet sich nach dem Einsatzgebiet der jeweiligen Kautschukmischung. Dem Fachmann sind die jeweiligen Mengen der Zudosierung bekannt. Bei der Zugabe von elementarem Schwefel betragen die Mengen im Fall einer Kautschukmischung für den Wulst von Fahrzeugreifen beispielsweise 0,1 bis 5 phr.

Für Laufstreifen von Fahrzeugreifen, die in der Regel gegenüber dem Wulst einen geringeren Schwefelgehalt aufweisen, beträgt die Menge an zuzugebenden elementaren Schwefel bevorzugt 0 bis 4 phr, besonders bevorzugt 0,1 bis 2,0 phr.

Gemäß vorteilhafter Ausführungsformen der Erfindung enthält die Kautschukmischung wenigstens einen Guanidin-Beschleuniger, insbesondere DPG (Diphenylguanidin).

Die Menge an DPG beträgt bevorzugt 0,1 bis 5 phr, bevorzugt 0,1 bis 3 phr, besonders bevorzugt 0,5 bis 2,5 phr, ganz besonders bevorzugt 0,5 bis 1,2 phr.

Gemäß vorteilhafter Ausführungsformen der Erfindung werden mehrere Beschleuniger eingesetzt.

Gemäß vorteilhafter Ausführungsformen der Erfindung wird ein Sulfenamidbeschleuniger, besonders bevorzugt CBS, in Kombination mit dem Guanidin-Beschleuniger DPG (Diphenylguanidin) eingesetzt.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger.

Außerdem können in der Kautschukmischung Vulkanisationsverzögerer vorhanden sein.

Die Begriffe "vulkanisiert" und "vernetzt" werden im Rahmen der vorliegenden Erfindung synonym verwendet.

Die oben beschriebene erfindungsgemäße Kautschukmischung ist besonders für die Verwendung in Fahrzeugreifen, insbesondere Fahrzeugluftreifen geeignet. Hierbei ist die Anwendung in allen Reifenbauteilen prinzipiell denkbar, insbesondere in einem Laufstreifen, insbesondere in der Cap eines Laufstreifens mit Cap/Base-Konstruktion, wie oben bereits beschrieben.

Zur Verwendung in Fahrzeugreifen wird die Mischung als Fertigmischung vor der Vulkanisation bevorzugt in die Form eines Laufstreifens gebracht und bei der Herstellung des Fahrzeugreifenrohlings wie bekannt aufgebracht.

Die Herstellung der erfindungsgemäßen Kautschukmischung zur Verwendung als Seitenwand oder sonstige Body- Mischung in Fahrzeugreifen erfolgt wie bereits beschrieben. Der Unterschied liegt in der Formgebung nach dem Extrusionsvorgang bzw. dem Kalandrieren der Mischung. Die so erhaltenen Formen der noch unvulkanisierten Kautschukmischung für eine oder mehrere unterschiedliche Body-Mischungen dienen dann dem Aufbau eines Reifenrohlings.

Als Body-Mischung werden hierbei die Kautschukmischungen für die sonstigen Bauteile eines Reifen, wie im Wesentlichen Trennplatte, Innenseele (Innenschicht), Kernprofil, Gürtel, Schulter, Gürtelprofil, Karkasse, Wulstverstärker, Wulstprofil, Hornprofil und Bandage. Zur Verwendung der erfindungsgemäßen Kautschukmischung in Riemen und Gurten, insbesondere in Fördergurten, wird die extrudierte noch unvulkanisierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und/oder mehrerer Lagen Kautschukmischung, einer und/oder mehrerer Lagen gleicher und/oder verschiedener Festigkeitsträger und einer und/oder mehreren weiteren Lagen dergleichen und/oder einer anderen Kautschukmischung.

Die Erfindung soll nun anhand von Vergleichs- und Ausführungsbeispielen, die in Tabelle 1 zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt.

Bei sämtlichen in der Tabelle enthaltenen Mischungsbeispielen sind die angegebenen Mengenangaben Gewichtsteile, die auf 100 Gewichtsteile Gesamtkautschuk (phr) oder auf 100 Gewichtsteile Kieselsäure (phf) bezogen sind.

Die Mischungsherstellung erfolgte unter üblichen Bedingungen in mehreren Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
- Rückprallelastizität bei Raumtemperatur und 70°C gemäß ISO 4662; Differenz: Rückprallelastizität bei 70 °C minus Rückprallelastizität bei RT
- Spannungswert bei 300 % Dehnung (Modul 300, M300), Zugfestigkeit und Bruchdehnung bei Raumtemperatur (RT) oder 70 °C gemäß ISO 37
- Shore-A-Härte bei Raumtemperatur und 70 °C mittels Durometer gemäß DIN ISO 7619-1
- Verlustfaktor tan d, synonym zu tan δ, und Speichermodul E' bei 0 °C und 70 °C aus dynamisch-mechanischer Messung gemäß DIN 53513, Temperaturdurchlauf ("temperature sweep"); 50/30 N: statische Anfangskraft 30 N, dynamische Oszillation zwischen 30 und 50 N
- Das Speichermodul E'mean gibt den Mittelwert der Dehnungen aus 0.1-12.0% an; gemessen wird gemäß DIN 53513 bei einer Temperatur von 55 °C und einer Frequenz von 10 Hz.

### Verwendete Substanzen

a) Kieselsäure: Zeosil^{®} 1165 MP, Firma Solvay; BET = 155 m²/g, CTAB = 156 m²/g
b) Amid: STRUKTOL ^{®} HT 254, Firma Schill + Seilacher "Struktol" GmbH
c) Fettsäureester als Fettsäure-Derivat: STRUKTOL ^{®} EF 44, Firma Schill + Seilacher "Struktol" GmbH; 4 phr entsprechen hier 8 phf
d) TESPT: 50 Gew.-% auf Ruß, bei der angegebenen Menge ist der Ruß nicht enthalten
e) Rußmenge 5 phr N339 + 5 phr Ruß N330 (Silan TESPT auf Ruß)
f) Schwefel OT 33: 66,667 Gew.-% Schwefel, 33,333 Gew.-% Öl, d. h. 0,4 phr S und 0,2 phr Öl
g) Weitere Zusatzstoffe: 2,5 phr 6PPD, 1,0 phr Ozonschutzwachs, 3,0 phr Zinkoxid, 2,5 phr Stearinsäure

Wie an Tabelle 1 erkennbar ist, weist die erfindungsgemäße Kautschukmischung E1 enthaltend wenigstens einen Fettsäureester gegenüber V1 (Öl) und V2 (Amid) ein verbessertes Rollwiderstandsverhalten, erkennbar an der Rückprallelastizität und dem Verlustfaktor tangens delta bei 70 °C, und eine Verbesserung im Zielkonflikt aus Rollwiderstand und Nassgriff, erkennbar an der größeren Differenz der Rückprallelastizitäten, auf. Gleichzeitig zeigt E1 vergleichbare Steifigkeiten bei RT und 70 °C, was an den Werten für M300 erkennbar ist, und Speichermoduli E' bei 0 und 70 °C. Damit zeigt E1 verbesserte Handling- und Abriebindikatoren, insbesondere für die Verwendung in Laufstreifen von Fahrzeugreifen, insbesondere von Nutzfahrzeugreifen.

Der erfindungsgemäße Fahrzeugreifen weist damit insbesondere ein besseres Eigenschaftsniveau hinsichtlich Rollwiderstand, Nassgriff und Handling-Verhalten, insbesondere bei verbessertem Rollwiderstand und verbessertem Zielkonflikt aus Rollwiderstand und Nassgriff, auf.

**Tabelle 1**

| | **Einh.** | **V1** | **V2** | **E1** |
|---|---|---|---|---|
| NR | phr | 100 | 100 | 100 |
| Ruß ^{e)} | phr | 10 | 10 | 10 |
| Kieselsäure ^{a)} | phr | 50 | 50 | 50 |
| RAE Öl | phr | 4,0 | - | - |
| Amid ^{b)} | phr | - | 4,0 | - |
| Fettsäureester ^{c)} | phr | - | - | 4,0 |
| Silan TESPT ^{d)} | phf | 10 | 10 | 10 |
| Zusatzstoffe ^{g)} | phr | 9 | 9 | 9 |
| DPG | phr | 0,8 | 0,8 | 0,8 |
| CBS | phr | 1,85 | 1,85 | 1,85 |
| Schwefel ^{f)} | phr | 0,6 | 0,6 | 0,6 |

| **Eigenschaften** | | | | |
|---|---|---|---|---|
| Härte RT | Shore A | 58 | 62 | 61 |
| Härte 70 °C | Shore A | 53 | 56 | 55 |
| Rückprall RT | % | 47,6 | 48,7 | 48,7 |
| Rückprall 70 °C | % | 60,5 | 63,4 | 64,9 |
| Differenz Rückpr. | | 12,9 | 14,8 | 16,2 |
| M 300 RT | MPa | 9,7 | 11,7 | 11,4 |
| Zugfestigkeit RT | MPa | 24 | 23,6 | 25,7 |
| Bruchdehnung RT | % | 609 | 563 | 590 |
| M300 70 °C | MPa | 5,7 | 7,3 | 6,8 |
| Zugfestigkeit 70 °C | MPa | 20,2 | 20,6 | 20,6 |
| Bruchdehnung 70 °C | % | 738 | 693 | 691 |
| E' mean | MPa | 6,3 | 6,0 | 6,7 |
| Tan d 0 °C | | 0,26 | 0,26 | 0,25 |
| E' 0 °C | MPa | 6,5 | 7,1 | 7,5 |
| Tan d 70 °C | | 0,111 | 0,107 | 0,099 |
| E' 70 °C | MPa | 4,4 | 4,6 | 4,9 |

## Patentansprüche

1. Schwefelvernetzbare Kautschukmischung, enthaltend wenigstens die folgenden Bestandteile:
- 75 bis 100 phr wenigstens eines natürlichen Polyisoprens; und
- wenigstens eine Kieselsäure; und
- wenigstens ein Fettsäure-Derivat, wobei die Menge an Fettsäure-Derivaten 5 bis 10 phf beträgt, wobei das wenigstens eine Fettsäure-Derivat ausgewählt ist aus Fettsäureestern, Fettsäuresalzen und Metallseifen; und
- wenigstens ein Polysulfidsilan, wobei das Polysulfidsilan wenigstens eine Polysulfidgruppe Sₙ aufweist, wobei n größer oder gleich 3 ist.

2. Schwefelvernetzbare Kautschukmischung nach Anspruch 1, **dadurch gekennzeichnet, dass** das Polysulfidsilan die Formel I) aufweist
I) (R¹)ₒSi-R¹-Sₙ-R¹-Si(R¹)ₒ,
wobei die Indices o unabhängig voneinander gleich 1 oder 2 oder 3 sein können und die Reste R¹ unabhängig voneinander gleich oder verschieden voneinander sein können und ausgewählt sind aus C₁-C₁₀-Alkoxygruppen, C₆-C₂₀-Phenoxygruppen, C₂-C₁₀-cyclischen Dialkoxygruppen, C₂-C₁₀-Dialkoxygruppen, C₄-C₁₀- Cycloalkoxygruppen, C₆-C₂₀- Arylgruppen, C₁-C₁₀-Alkylgruppen, C₂-C₂₀- Alkenylgruppen, C₂-C₂₀- Alkinylgruppen, C₇-C₂₀- Aralkylgruppen, Halogeniden oder
Alkylpolyethergruppe -O-(R⁶-O)ᵣ-R⁷, wobei die Reste R⁶ gleich oder verschieden sind und verzweigte oder unverzweigte, gesättigte oder ungesättigte, aliphatische, aromatische oder gemischt aliphatische/aromatische zweibindige C₁-C₃₀-Kohlenwasserstoffgruppe sind, r eine ganze Zahl von 1 bis 30 ist und die Reste R⁷ unsubstituierte oder substituierte, verzweigte oder unverzweigte einbindige Alkyl-, Alkenyl-, Aryl- oder Aralkylgruppen sind, oder
zwei R¹ entsprechen einer Dialkoxygruppe mit 2 bis 10 Kohlenstoffatomen wobei dann o < 3 ist,
oder es können zwei oder mehr Silane gemäß Formel I) über Reste R¹ oder durch Kondensation verbrückt sein; und
wobei die Bedingung gilt, dass in Formel I) in jeder (R¹)ₒSi-Gruppe wenigstens ein R¹ aus denjenigen oben genannten Möglichkeiten ausgewählt ist, bei der dieses R¹ i) über ein Sauerstoffatom an das Siliziumatom gebunden ist oder ii) ein Halogenid ist;
und die Reste R² unabhängig voneinander gleich oder verschieden sein können und verzweigte oder unverzweigte, gesättigte oder ungesättigte, aliphatische, aromatische oder gemischt aliphatische/aromatische C₁-C₃₀-Kohlenwasserstoffgruppen sind, die Heteroatome enthalten können;
und wobei n größer oder gleich 3 ist.

3. Schwefelvernetzbare Kautschukmischung nach einem der vorherigen Ansprüche, **dadurch gekennzeichnet, dass** das Polysulfidsilan die Formel II) aufweist
II) (R¹)₃Si-R²-Sₙ-R²-Si(R¹)₃,
wobei R¹ unabhängig voneinander gleich oder verschieden sein können und Alkoxygruppen sind und R² unverzweigte gesättigte C₁-C₃₀-Kohlenwasserstoffgruppen, bevorzugt C₂-C₁₀-Kohlenwasserstoffgruppen, sind und n größer oder gleich 3, bevorzugt 3 oder 4, ist.

4. Schwefelvernetzbare Kautschukmischung nach Anspruch 3, **dadurch gekennzeichnet, dass** das Polysulfidsilan die Formel III) aufweist
III) (EtO)₃Si-(CH₂)₃-S₄-(CH₂)₃-Si(EtO)₃,
wobei EtO für Ethoxy steht.

5. Schwefelvernetzbare Kautschukmischung nach einem der vorherigen Ansprüche, **dadurch gekennzeichnet, dass** die Menge an Kieselsäure 30 bis 300 phr, bevorzugt 30 bis 150 phr, besonders bevorzugt 30 bis 100 phr, beträgt.

6. Schwefelvernetzbare Kautschukmischung nach einem der vorherigen Ansprüche, **dadurch gekennzeichnet, dass** wenigstens eine Kieselsäure enthalten ist, die eine BET-Oberfläche von 140 bis 200 m²/g aufweist.

7. Schwefelvernetzbare Kautschukmischung nach einem der vorherigen Ansprüche, **dadurch gekennzeichnet, dass** sie 0,1 bis 15 phr wenigstens eines Rußes enthält.

8. Schwefelvernetzbare Kautschukmischung nach einem der vorherigen Ansprüche, **dadurch gekennzeichnet, dass** das wenigstens eine Fettsäure-Derivat wenigstens eine Zinkseife umfasst.

9. Vulkanisat, welches durch die Schwefelvulkanisation wenigstens einer Kautschukmischung nach einem der Ansprüche 1 bis 8 erhalten ist.

10. Fahrzeugreifen, **dadurch gekennzeichnet, dass** er in wenigstens einem Bauteil, bevorzugt wenigstens im Laufstreifen und/oder der Seitenwand, wenigstens ein Vulkanisat nach Anspruch 9 aufweist.

11. Fahrzeugreifen nach Anspruch 10, **dadurch gekennzeichnet, dass** zumindest der Laufstreifen das Vulkanisat nach Anspruch 9 aufweist und der Laufstreifen bevorzugt eine Profiltiefe von ≥ 15 mm aufweist.

12. Verwendung der Kautschukmischung nach einem der Ansprüche 1 bis 8 zur Herstellung von technischen Gummiartikeln, wie Bälge, Förderbänder, Luftfedern, Gurte, Riemen oder Schläuche, sowie Schuhsohlen.

## Claims

1. Sulfur-crosslinkable rubber mixture containing at least the following constituents
- 75 to 100 phr of at least one natural polyisoprene and
- at least one silica and
- at least one fatty acid derivative, wherein the amount of fatty acid derivatives is 5 to 10 phf, wherein the at least one fatty acid derivative is selected from fatty acid esters, fatty acid salts and metal soaps, and
- at least one polysulfide silane, wherein the polysulfide silane comprises at least one polysulfide group Sₙ, wherein n is not less than 3.

2. Sulfur-crosslinkable rubber mixture according to Claim 1, **characterized in that** the polysulfide silane has the formula I)
I) (R¹)ₒSi-R²-Sₙ-R²⁻Si(R¹)ₒ,
wherein the indices o may independently of one another be 1 or 2 or 3 and the radicals R¹ may independently of one another be identical or different and are selected from C₁-C₁₀-alkoxy groups, C₆-C₂₀-phenoxy groups, C₂-C₁₀-cyclic dialkoxy groups, C₂-C₁₀-dialkoxy groups, C₄-C₁₀-cycloalkoxy groups, C₆-C₂₀-aryl groups, C₁-C₁₀-alkyl groups, C₂-C₂₀-alkenyl groups, C₂-C₂₀- alkynyl groups, C₇-C₂₀-aralkyl groups, halides or alkyl polyether group -O-(R⁶-O)ᵣ-R⁷, wherein the radicals R⁶ are identical or different and are branched or unbranched, saturated or unsaturated, aliphatic, aromatic or mixed aliphatic/aromatic divalent C₁-C₃₀-hydrocarbon groups, r is an integer from 1 to 30 and the radicals R⁷ are unsubstituted or substituted, branched or unbranched monovalent alkyl, alkenyl, aryl or aralkyl groups or
two R¹ correspond to one dialkoxy group having 2 to 10 carbon atoms, wherein o is then < 3,
or two or more silanes of formula I) may be bridged via radicals R¹ or by condensation and
wherein the proviso applies that in formula I) in each (R¹)ₒSi group at least one R¹ is selected from the abovementioned options where this R¹ is i) bonded to the silicon atom via an oxygen atom or ii) is a halide and the radicals R² may independently of one another be identical or different and are branched or unbranched, saturated or unsaturated, aliphatic, aromatic or mixed aliphatic/aromatic C₁-C₃₀-hydrocarbon groups which may contain heteroatoms
and wherein n is not less than 3.

3. Sulfur-crosslinkable rubber mixture according to either of the preceding claims, **characterized in that** the polysulfide silane has the formula II)
II) (R¹)₃Si-R²-Sₙ-R²-Si(R¹)₃,
wherein R¹ may independently of one another be identical or different and are alkoxy groups and R² are unbranched saturated C₁-C₃₀-hydrocarbon groups, preferably C₂-C₁₀-hydrocarbon groups, and n is not less than 3, preferably 3 or 4.

4. Sulfur-crosslinkable rubber mixture according to Claim 3, **characterized in that** the polysulfide silane has the formula III)
III) (EtO)₃Si-(CH₂)₃-S₄-(CH₂)₃-Si(EtO)₃,
wherein EtO represents ethoxy.

5. Sulfur-crosslinkable rubber mixture according to any of the preceding claims, **characterized in that** the amount of silica is 30 to 300 phr, preferably 30 to 150 phr, particularly preferably 30 to 100 phr.

6. Sulfur-crosslinkable rubber mixture according to any of the preceding claims, **characterized in that** it contains at least one silica having a BET surface area of 140 to 200 m²/g.

7. Sulfur-crosslinkable rubber mixture according to any of the preceding claims, **characterized in that** it contains 0.1 to 15 phr of at least one carbon black.

8. Sulfur-crosslinkable rubber mixture according to any of the preceding claims, **characterized in that** the at least one fatty acid derivative comprises at least one zinc soap.

9. Vulcanizate obtained by sulfur vulcanization of at least one rubber mixture according to any of Claims 1 to 8.

10. Vehicle tire, **characterized in that** it comprises at least one vulcanizate according to Claim 9 in at least one component, preferably at least in the tread and/or the sidewall.

11. Vehicle tire according to Claim 10, **characterized in that** at least the tread comprises the vulcanizate according to Claim 9 and the tread preferably has a tread depth of ≥ 15 mm.

12. Use of the rubber mixture according to any of Claims 1 to 8 for producing technical rubber articles, such as bellows, conveyor belts, air springs, belts, drive belts or hoses or else shoe soles.

## Revendications

1. Mélange pour caoutchouc, réticulable par le soufre, contenant au moins les constituants suivants :
- 75 à 100 phr (parties par cent parties de caoutchouc) d'au moins un polyisoprène naturel ; et
- au moins une silice ; et
- au moins un dérivé d'acide gras, la quantité de dérivés d'acide gras représentant 5 à 10 phf (parties par cent parties de charge), ledit au moins un dérivé d'acide gras étant choisi parmi les esters d'acide gras, les sels d'acide gras et les savons métalliques ; et
- au moins un polysulfure-silane, le polysulfure-silane présentant au moins un groupe polysulfure Sₙ, n étant supérieur ou égal à 3.

2. Mélange pour caoutchouc, réticulable par le soufre selon la revendication 1, **caractérisé en ce que** le polysulfure-silane présente la formule I)
I) (R¹)ₒSi-R²-Sₙ-R²-Si(R¹)ₒ,
dans laquelle les indices o peuvent valoir, indépendamment l'un de l'autre, 1 ou 2 ou 3 et les radicaux R¹ peuvent, indépendamment les uns des autres, être identiques ou différents et sont choisis parmi les groupes C₁-C₁₀-alcoxy, C₆-C₂₀-phénoxy, C₂-C₁₀-dialcoxy cyclique, C₂-C₁₀-dialcoxy, C₄-C₁₀-cycloalcoxy, C₆-C₂₀-aryle, C₁-C₁₀-alkyle, C₂-C₂₀-alcényle, C₂-C₂₀-alcynyle, C₇-C₂₀-aralkyle, halogénure ou
le groupe alkylpolyéther -O-(R⁶-O)ᵣ-R⁷, les radicaux R⁶ étant identiques ou différents et représentant des groupes hydrocarbonés en C₁-C₃₀ ramifiés ou non ramifiés, saturés ou insaturés, aliphatiques, aromatiques ou aliphatiques/aromatiques mixtes, bivalents, r représentant un nombre entier de 1 à 30 et les radicaux R⁷ représentant des groupes alkyle, alcényle, aryle ou aralkyle non substitués ou substitués, ramifiés ou non ramifiés, monovalents, ou
deux radicaux R¹ correspondent à un groupe dialcoxy comprenant 2 à 10 atomes de carbone, o étant alors < 3,
ou deux silanes ou plus selon la formule I) peuvent être pontés via des radicaux R¹ ou par condensation ; et
la condition suivante s'appliquant : dans la formule I), dans chaque groupe (R¹)ₒSi, au moins un R¹ est choisi parmi les possibilités susmentionnées dans lesquelles cet R¹ i) est lié via un atome d'oxygène à l'atome de silicium ou ii) représente un halogénure ;
les radicaux R², indépendamment l'un de l'autre, peuvent être identiques ou différents et représentent des groupes hydrocarbonés en C₁-C₃₀ ramifiés ou non ramifiés, saturés ou insaturés, aliphatiques, aromatiques ou aliphatiques/aromatiques mixtes, qui peuvent contenir des hétéroatomes ; et n est supérieur ou égal à 3.

3. Mélange pour caoutchouc, réticulable par le soufre selon l'une quelconque des revendications précédentes, **caractérisé en ce que** le polysulfure-silane présente la formule II)
II) (R¹)₃Si-R²-Sₙ-R²-Si(R¹)₃,
dans laquelle les radicaux R¹, indépendamment les uns des autres, peuvent être identiques ou différents et représentent des groupes alcoxy et les radicaux R² représentent des groupes hydrocarbonés en C₁-C₃₀, de préférence des groupes hydrocarbonés en C₂-C₁₀, non ramifiés, saturés et n est supérieur ou égal à 3, de préférence 3 ou 4.

4. Mélange pour caoutchouc, réticulable par le soufre selon la revendication 3, **caractérisé en ce que** le polysulfure-silane présente la formule III)
III) (EtO)₃Si-(CH₂)₃-S₄-(CH₂)₃-Si(EtO)₃,
dans laquelle EtO représente éthoxy.

5. Mélange pour caoutchouc, réticulable par le soufre selon l'une quelconque des revendications précédentes, **caractérisé en ce que** la quantité de silice représente 30 à 300 phr, de préférence 30 à 150 phr, de manière particulièrement préférée 30 à 100 phr.

6. Mélange pour caoutchouc, réticulable par le soufre selon l'une quelconque des revendications précédentes, **caractérisé en ce qu'**il contient au moins une silice, qui présente une surface BET de 140 à 200 m²/g.

7. Mélange pour caoutchouc, réticulable par le soufre selon l'une quelconque des revendications précédentes, **caractérisé en ce qu'**il contient 0,1 à 15 phr d'au moins une suie.

8. Mélange pour caoutchouc, réticulable par le soufre selon l'une quelconque des revendications précédentes, **caractérisé en ce que** ledit au moins un dérivé d'acide gras comprend au moins un savon de zinc.

9. Produit de vulcanisation qui est obtenu par vulcanisation par le soufre d'au moins un mélange pour caoutchouc selon l'une quelconque des revendications 1 à 8.

10. Pneumatique pour véhicule, **caractérisé en ce qu'**il contient dans au moins un élément, de préférence au moins dans la bande de roulement et/ou la bande latérale, au moins un produit de vulcanisation selon la revendication 9.

11. Pneumatique pour véhicule selon la revendication 10, **caractérisé en ce qu'**au moins la bande de roulement présente le produit de vulcanisation selon la revendication 9 et la bande de roulement présente de préférence une profondeur de sculpture ≥ 15 mm.

12. Utilisation du mélange pour caoutchouc selon l'une quelconque des revendications 1 à 8 pour la fabrication d'articles techniques en caoutchouc, tels que des soufflets, des bandes transporteuses, des ressorts pneumatiques, des ceintures, des courroies ou des tuyaux souples ainsi que des semelles de chaussure.
